# EUROPEAN PATENT APPLICATION

(11) **EP 4 819 617 A1**
(43) Date of publication of application: **07.10.2026**
(21) Application number: 26169788.2
(22) Date of filing: 31.03.2026
(51) Int. Cl.: H04N 21/431, G11B 27/34, H04N 21/443, H04N 21/472, H04N 21/4722, H04N 21/4728, H04N 21/81, G06F 16/738, G06F 16/78, G06V 20/40, G11B 27/031

(54) **METHOD, APPARATUS, DEVICE, AND MEDIUM FOR PLAYING MEDIA DATA**

(30) Priority: 02.04.2025 CN 202510413717
(71) Applicant: Bytedance Technology Ltd., KY1 - 1205 Grand Cayman Cayman Islands (KY)
(72) Inventor: Shi, Jingya, Beijing, 100028 (CN)
(74) Representative: Marks & Clerk LLP

(57) **Abstract**

A method, an apparatus, a device, and a medium for playing media data are provided. In the method, the media data is presented in a first region of a player application in response to receiving the media data. Configuration information associated with the media data is obtained, and the configuration information specifies a point of interest in the media data. Marked data corresponding to the point of interest is presented in a second region of the player application based on the configuration information.

## Description

### FIELD

Implementations of the present disclosure generally relate to media data management, and in particular, to a method, an apparatus, a device, and a computer-readable storage medium for playing media data.

### BACKGROUND

With the development of computer technologies, media data has become a major source of user information, for example, users may play media data to obtain knowledge. During the playing process, a user may miss an important content in the media data because of attentiveness reduction, fatigue, and so on, and may not accurately understand the content in the media data. At this point, it is desirable to play media data in a more efficient manner, and it is desirable to present the important content in the media data in a more explicit manner, thereby enabling the user to more fully and accurately understand the media data.

### SUMMARY

In a first aspect of the present disclosure, a method for playing media data is provided. In the method, the media data is presented in a first region of a player application in response to receiving the media data. Configuration information associated with the media data is obtained, and the configuration information specifies a point of interest in the media data. Marked data corresponding to the point of interest is presented in a second region of the player application based on the configuration information.

In a second aspect of the present disclosure, an apparatus for playing media data is provided. The apparatus comprises a first presenting module configured to present, in response to receiving the media data, the media data in a first region of a player application; an obtaining module configured to obtain configuration information associated with the media data, the configuration information specifying a point of interest in the media data; and a second presenting module configured to present, in a second region of the player application, marked data corresponding to the point of interest based on the configuration information.

In a third aspect of the present disclosure, an electronic device is provided. The electronic device comprises: at least one processor; and at least one memory coupled to at least one processor and storing instructions for execution by the at least one processor, the instructions, when executed by the at least one processor, causing the electronic device to perform the method according to the first aspect of the present disclosure.

In a fourth aspect of the present disclosure, there is provided a computer-readable storage medium having stored thereon a computer program which, when executed by a processor, causes the processor to perform the method according to the first aspect of the present disclosure.

In a fifth aspect of the present disclosure, there is provided a computer program product, comprising a computer program, wherein the computer program, when executed by a processor, performs the method according to the first aspect of the present disclosure.

It should be understood that the content described in this disclosure is not intended to limit key features or important features of implementations of the present disclosure, nor is it intended to limit the scope of the present disclosure. Other features of the present disclosure will become readily understood from the following description.

### BRIEF DESCRIPTION OF DRAWINGS

The above and other features, advantages, and aspects of the various implementations of the present disclosure will become more apparent from the following detailed description taken in combination with the accompanying drawings. In the drawings, the same or similar reference numbers refer to the same or similar elements, wherein:
FIG. 1 illustrates a block diagram of an application environment according to an implementation of the present disclosure;
FIG. 2 illustrates a block diagram for playing media data according to some implementations of the present disclosure;
FIG. 3 illustrates a block diagram for determining marked data according to some implementations of the present disclosure;
FIG. 4 illustrates a block diagram of an interface of a media player according to some implementations of the present disclosure;
FIG. 5 illustrates a block diagram of an interaction with marked data according to some implementations of the present disclosure;
FIG. 6 illustrates a block diagram of an interaction with marked data according to some implementations of the present disclosure;
FIG. 7 illustrates a flowchart of a method for playing media data according to some implementations of the present disclosure;
FIG. 8 illustrates a block diagram of an apparatus for playing media data according to some implementations of the present disclosure; and
FIG. 9 illustrates a block diagram of a device capable of implementing various implementations of the present disclosure.

### DETAILED DESCRIPTION

Implementations of the present disclosure will be described in more detail below with reference to the accompanying drawings. While certain implementations of the present disclosure are shown in the accompanying drawings, it should be understood that the present disclosure may be implemented in various forms and should not be construed as limited to the implementations set forth herein, but rather, these implementations are provided for a more thorough and complete understanding of the present disclosure. It should be understood that the drawings and implementations of the present disclosure are for illustrative purposes only and are not intended to limit the scope of the present disclosure.

In the description of implementations of the present disclosure, the terms "include/comprise" and similar terms should be understood to include "including/comprising but not limited to". The term "based on" should be understood as "based at least in part on". The terms "an implementation" or "the implementation" should be understood as "at least one implementation". The term "some implementations" should be understood as "at least some implementations". Other explicit and implicit definitions may also be included below. As used herein, the term "model" may represent an association between various data. For example, the association may be obtained based on various technical solutions currently known and/or to be developed in the future.

It may be understood that the data involved in the technical solution (including but not limited to the data itself, the acquisition or use of the data) should follow the requirements of the corresponding laws, regulations, and related provisions.

It can be understood that, before the technical solutions disclosed in the embodiments of the present disclosure are used, the types of personal information, the usage scope, the usage scenario and the like related to the present disclosure should be notified to the user in an appropriate manner according to the relevant laws and regulations, and the authorization of the user is obtained.

For example, prompt information is sent to the user in response to receiving an active request from a user, to explicitly prompt the user that the requested operation will need to obtain and use the personal information of the user. Therefore, the user can autonomously select whether to provide personal information to software or hardware executing the operation of the technical solution of the present disclosure according to the prompt information.

As an optional but non-limiting implementation, in response to receiving an active request from the user, a manner of sending prompt information to the user may be, for example, a pop-up window, and prompt information may be presented in a text manner in the pop-up window. In addition, the pop-up window may further carry a selection control for the user to select "agree" or "disagree" to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

The term "in response to" as used herein means a state in which a respective event occurs or a condition is satisfied. It will be appreciated that the timing of execution of a subsequent action performed in response to the event or condition is not necessarily strongly correlated with the time at which the event occurs or the condition holds. For example, in some cases, subsequent actions may be performed immediately when an event occurs or a condition holds; while in other cases, subsequent actions may be performed after a period of time elapses after an event occurs or a condition holds.

### Example Environment

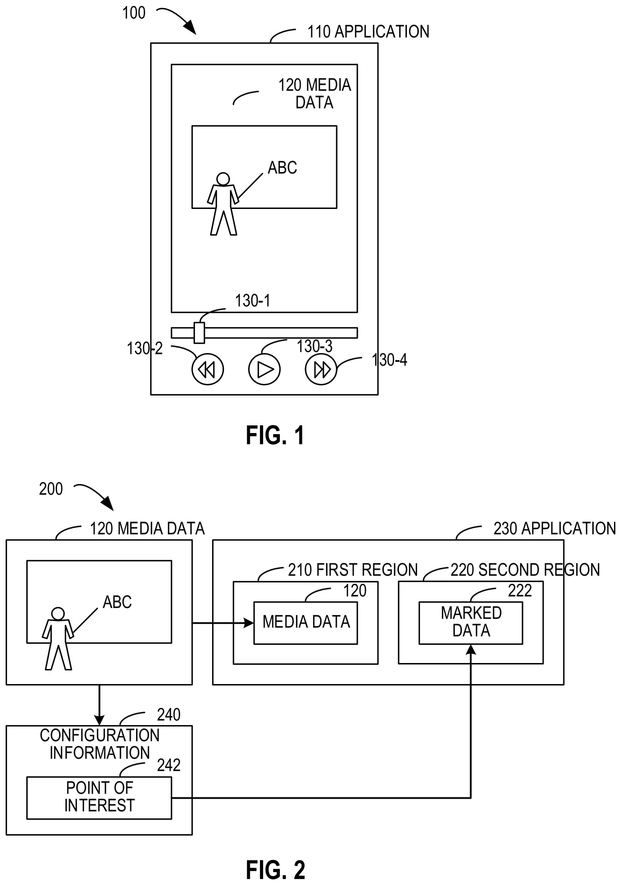

Media data has become the primary source of user information, and there are multiple formats of media data, for example, a user may play media data to obtain knowledge. Referring to FIG. 1, which describes an application environment according to some implementations of the present disclosure. FIG. 1 is a block diagram 100 of an application environment according to an implementation of the present disclosure. As shown in FIG. 1, media data 120 may be played in an application 110 (for example, a media playing application).

During playing, a user may control playing of the media data 120 via multiple controls (for example, a progress bar control 130-1, a rewind control 130-2, a playing control 130-3, a fast forward control 130-4, and so on, collectively referred to as controls 130). For example, a playback position of the progress bar control 130-1 may be adjusted to control the playback position, and so on. However, during playing, the user can only perform limited interactions with the media data. At the same time, the player application can only passively present content originally included in the media data, and cannot actively remind the user of the point of interest in the media data. This may cause the user to miss the important content in the media data because of attentiveness reduction, fatigue, and other reasons during viewing of the media data, and may not accurately understand the content in the media data.

At this point, it is desirable to play media data in a more efficient manner, and it is desirable to present the important content in the media data in a more explicit manner, thereby enabling the user to more fully and accurately understand the media data.

### Summary of Playing Media Data

In order to at least partially solve the deficiencies in the prior art, according to an implementation of the present disclosure, a method for playing media data is provided. In general, configuration information may be provided for the media data, and a point of interest in the media data may be specified by the configuration information. During the process of playing the media data, important data corresponding to the point of interest may be highlighted, thereby improving the ability of the user to understand the media data. Referring to FIG. 2, a summary is described according to an implementation of the present disclosure, and FIG. 2 illustrates a block diagram 200 for playing media data according to some implementations of the present disclosure.

For ease of description, an English training video is described below only as an example of the media data. As shown in FIG. 2, the media data 120 may have corresponding configuration information 240 that may specify a point of interest 242 in the media data 120. The player application (for example, an application 230) may include multiple playing regions: a first region 210 for presenting media data and a second region 220 for presenting additional data different from the media data. During playing, the media data 120 may be received, and the media data 120 is presented in the first region 210 of the player application. Further, the configuration information 240 associated with the media data 120 may be obtained, and marked data 222 corresponding to the point of interest 242 is presented in the second region 220 of the player application based on the configuration information 240.

Specifically, it is assumed that the media data 120 includes a training video that explains English words, and the first part of the video includes an introduction of specific meanings of a plurality of English words, and the second part of the video includes exercises for testing whether the user masters the plurality of words. At this point, the configuration information may be provided by a variety of personnel to specify the content of interest. For example, an administrator (for example, a teacher) of the media data may specify in the configuration information key words one expects students to master, or a section one expects students to pay attention to (for example, a section that introduces common misuse of the words), and so on. As another example, a viewer (for example, a student) of the media data may specify in the configuration information a section one wishes to focus on, for example, new words, words that are frequently misspelled, and so on.

With implementations of the present disclosure, different users may utilize the configuration information to specify points of interest in the media data. During the playing process of the media data, important data corresponding to the points of interest may be highlighted, thereby improving the efficiency of obtaining information by the user of the media player.

### Detailed Procedure for Playing Media Data

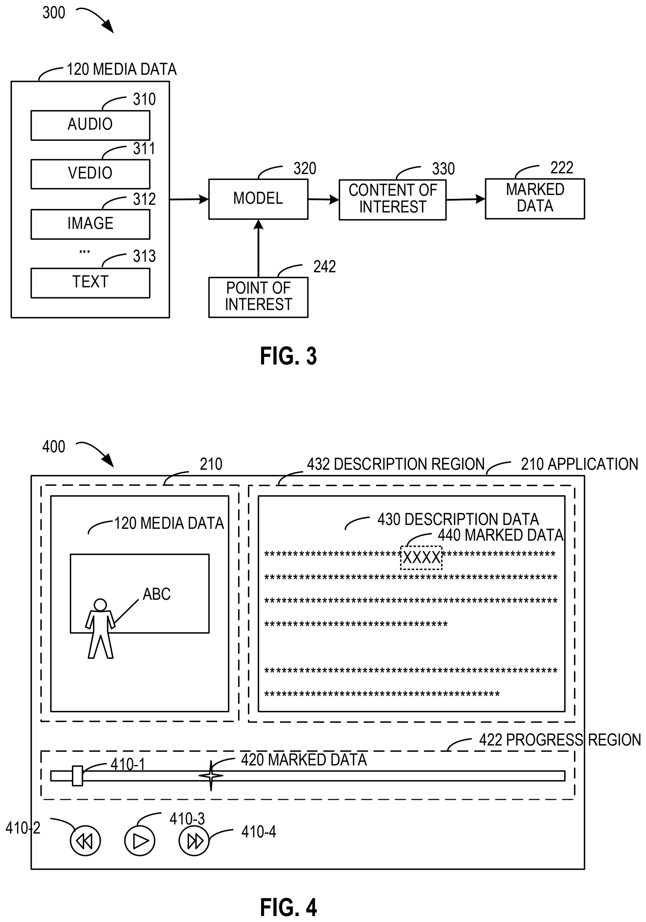

Having described a summary of the player application, more details regarding presenting the media data will be described below. According to some implementations of the present disclosure, the marked data corresponding to the point of interest may be determined in the media data based on the configuration information. FIG. 3 illustrates a block diagram 300 for determining marked data according to some implementations of the present disclosure. As shown in FIG. 3, the media data 120 may include data with a plurality of modalities, for example, a portion of interest 330 matching the point of interest 242 may be searched from an audio 310, a video 311, an image 312, or text 313 in the media data.

The portion of interest 330 may be determined in a number of ways, for example, the audio 310 in the media data 120 may first be converted to text, and then the portion of interest 330 may be determined based on a text search. Alternatively, and/or in addition, video frames of the video 311 may be converted into images, and then the portion of interest 330 may be determined in a manner of image recognition. Alternatively, and/or in addition, the content of interest in the media data 120 may be determined based on a machine learning model (for example, a model 320). For example, a prompt may be constructed based on the point of interest 242, and the capabilities of the model 320 may be invoked to determine the portion of interest 330 in the media data that matches the point of interest 242.

According to some implementations of the present disclosure, a point of interest may correspond to one or more contents of interest. Assuming that the point of interest is "word A," a plurality of contents of interest including an explanation content of word A (corresponding to segment 1 between time points t1-t2 in the video), and exercises related to word A (corresponding to segment 1 between time points t3-t4 in the video), and so on may be determined. Further, marked data corresponding to each content of interest may be determined separately.

According to some implementations of the present disclosure, the first region and the second region may be located in different regions of the player application, so that the marked data with different formats may be presented in different regions of the player application. More details are described with reference to FIG. 4, which illustrates a block diagram 400 of an interface of a media player according to some implementations of the present disclosure. As shown in FIG. 4, the second region may include a progress region 422 for presenting a playing progress of the media data. Alternatively, and/or in addition, the second region may include a description region 432 for presenting description data associated with the media data. With some implementations of the present disclosure, the marked data may be presented in different regions to provide more prompt information about the media data to the user.

According to some implementations of the present disclosure, the marked data is interactable data, and an interaction result corresponding to an interaction request may be provided in the player application in response to receiving the interaction request for the marked data. With some implementations of the present disclosure, a video that can only be played passively may be converted into interactive media data. In this way, the user may interact with the media data to obtain richer and accurate information. In this case, instead of re-editing and creating new media data, configuration information may be directly used to specify an interactive part in the media data, thereby generating more interactive media data in a simpler and more efficient manner. For example, a student may adjust a teaching video of a teacher to a more suitable version based on one's own basis.

Referring to FIG. 4, more information about the interaction may be described, the second region may include the progress region 422 for presenting the playing progress of the media data, and marked data 420 may be presented in the progress region 422. Specifically, the marked data 420 corresponding to the point of interest may be presented in the progress region 422, and the marked data 420 may indicate the playback position of the content of interest specified by the point of interest in the media data. For example, the marked data 422 may be represented in a star icon and/or other icon.

According to some implementations of the present disclosure, one or more marked data 422 may be provided, and a presentation format of the marked data may be specified, for example, one or more marked data corresponding to a certain point of interest may have the same or different visual representations. Specifically, different colors may be specified to respectively represent a plurality of marked data corresponding to different points of interest, for example, one or more pieces of marked data corresponding to the point of interest "word A" may be displayed in red. Alternatively, and/or in addition, the various marked data may be distinguished in different numbers. For example, the playback position (for example, time period t1-t2) of the first content of interest corresponding to "word A" in the video may be represented by red number 1, the playback position (for example, time period t3-t4) of the second content of interest corresponding to "word A" in the video may be represented in red number 2, and so on. Similarly, the playback position of the first content of interest corresponding to another point of interest "word B" in the video may be represented by blue number 1, the playback position of the second content of interest corresponding to "word B" in the video may be represented by blue number 2, and so on.

Alternatively, and/or in addition, with continued reference to FIG. 4, marked data 440 may be presented in the description region 432 for presenting description data associated with the media data. Specifically, the description data may be identified from at least one of the media data: a video, an audio, text, or an image; the marked data corresponding to the point of interest is determined from the description data; and the description data is presented in the description region in a first style, and the marked data is presented in a second style.

According to some implementations of the present disclosure, description data 430 may be extracted from data with various modalities of the media data. For example, the audio data may be converted into text data by using a speech processing model; the content described by the video may be determined by using a video processing model; the content described by the image may be determined by using an image processing model; subtitle information of the media data may be processed by using a text processing model, and the like. The extracted various information may be integrated to generate the description data 430. Alternatively, and/or in addition, the prompt may be constructed, and the description data 430 may be generated using a language model with multimodal processing capability. For example, a prompt may be represented as "please extract description data from the following videos, speech recognition results of all contents in the video needs to be included", and the like.

According to some implementations of the present disclosure, the description data 430 may be represented in a text format. Alternatively, and/or in addition, the description data 430 may include, for example, an image, an audio, a video content. Specifically, assuming that the point of interest "word A" is "car", the description data 430 may provide an image of "car", an audio of "car", a video with related explanation of "car", and so on.

Further, the marked data corresponding to the point of interest may be determined from the description data 430, and the description data 430 and the marked data 440 may be respectively presented in the description region 440 in different formats. For example, the description data 430 may be presented in a plain text format, and the marked data 440 may be presented in a highlighted format (for example, colored, bold, larger font size, highlighted, underlined, italic, and so on). In this manner, more information about the media data 120 may be provided in the description region 432 for the user to query the desired content. Alternatively, and/or in addition, the marked data may be presented in the image format and the video format in a block diagram manner.

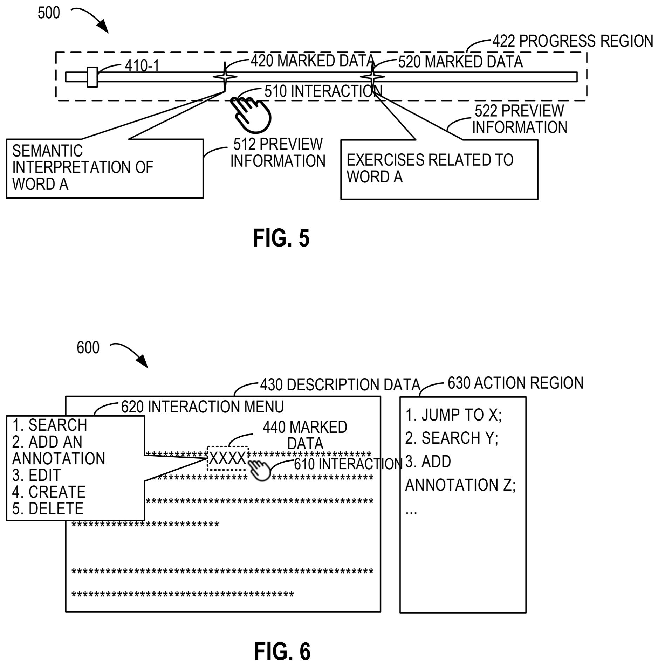

According to some implementations of the present disclosure, a user may perform multiple types of interactions with the marked data to obtain more information. Specifically, the interaction result corresponding to the interaction request may be provided in the player application based on the type of the interaction request. Referring to FIG. 5, more information about an interaction with the marked data 420 in the progress region 422 is described, which illustrates a block diagram 500 of an interaction with marked data according to some implementations of the present disclosure. As shown in FIG. 5, a user may perform an interaction 510 with the marked data 420. Preview information 512 corresponding to the content of interest may be presented in response to determining that the interaction request is of a preview type. For example, a user may hover a cursor near the marked data 420 to view the preview information 512. The preview information 512 may include a summary of a content of interest "a semantic interpretation of word A" and direct to a video segment explaining the semantic interpretation of word A in the video.

Alternatively, and/or in addition, the content of interest is presented in the first region of the player application in response to determining that the interaction request is of a navigation type. For example, a user may double-click the marked data 420 to present, in the playing region, a video segment in the video corresponding to the marked data 420. With some implementations of the present disclosure, a user may interact with the marked data, thereby switching to a segment of the content of interest in the video data in a simpler and efficient manner. According to some implementations of the present disclosure, the progress region 422 may further include marked data 520, and a user may operate the marked data 520 in a similar manner. For example, when a cursor hovers over the marked data 520, preview information 522 may be presented; when the marked data 520 is double-clicked, a video segment explaining exercises related to the word A in the video may be navigated to.

In the following, more details of a user interacting with the marked data 440 in the description region are described with reference to FIG. 6, which illustrates a block diagram 600 of an interaction with marked data according to some implementations of the present disclosure. As shown in FIG. 6, an interaction 610 between a user and the marked data 440 may be detected. According to some implementations of the present disclosure, in a process of providing the interaction result corresponding to the interaction request in the player application, the content of interest specified by the point of interest is presented in the first region of the player application in response to determining that the interaction request is of the navigation type. With some implementations of the present disclosure, a user may operate with the marked data, thereby switching to a segment of the content of interest in the video data in a simpler and efficient manner. Specifically, the user may double-click the marked data 440, at which point a video segment corresponding to the marked data 440 may be presented in the first region of the player application. Assuming the marked data 440 corresponds to the semantic interpretation of the word A, the video segment explaining the semantic interpretation of the word A in the video may be navigated to.

According to some implementations of the present disclosure, in the process of providing the interaction result corresponding to the interaction request in the player application, an operation corresponding to the interaction request is performed in the player application in response to determining that the interaction request is of an operation type. For example, a user may right-click the marked data 440 to perform more operations in a pop-up interaction menu 620, where the operations may include at least one of: searching, editing, or adding an annotation, and so on. In particular, information corresponding to the marked data 440 may be searched. A search range may be specified, for example, searching in the description data, searching in media data, or searching in an external database. For an example providing an English training video, the external database may include, but is not limited to, a dictionary, a grammar book, an exercise book, and so forth. Alternatively, and/or in addition, a search may be performed in an external network, such as in an online dictionary or a learning forum on the Internet. With some implementations of the present disclosure, a user may be supported to further search for information of interest, thereby improving the efficiency of information acquisition.

According to some implementations of the present disclosure, a user may click "add an annotation" to record a learning note, and the like. For example, a user may search for more example sentences about word A and add an example sentence to the annotation. Compared to conventional players that only allow video playing, the technical solutions of the present disclosure may allow a user to make notes during viewing of a video, thereby increasing the level of understanding of the video content. Alternatively, and/or in addition, the user is allowed to export the annotation, and the annotation may comprise time information corresponding to the annotation, for example, the annotation may correspond to a time period in the video. Further, the annotation may be exported as a text file or the like.

According to some implementations of the present disclosure, a user may click an "edit" menu to edit information associated with the marked data 440. For example, a user may edit a definition of a point of interest, a number of the marked data expected to be presented, a display format of the marked data, and the like. For example, the user may specify that for a certain point of interest, at most N pieces of marked data are presented, N pieces of marked data are selected from the video according to the time axis of the video, the marked data is presented in a yellow highlighting manner, and the like. With some implementations of the present disclosure, the user is allowed to adjust the marked data in the process of playing the video, to support an interaction mode that more conforms to the needs of a user.

According to some implementations of the present disclosure, a user may click "create" to create another point of interest based on at least a portion of the description data, and update the configuration information with the other point of interest. Specifically, the user may create a new point of interest, for example, "word C". The new point of interest may be stored in the configuration information, and at this time, when the player application is again used to play the video, the marked information (for example, the plurality of marked information about the word A, the word B, and the word C) corresponding to the updated point of interest may be presented in the process of playing the video because the configuration information has been updated. Alternatively, and/or in addition, the user may click "delete" to delete the point of interest corresponding to the marked data 440 from the configuration information.

According to some implementations of the present disclosure, one or more points of interest corresponding to the current video may be presented, and controls for editing the key points described above may be provided. With some implementations of the present disclosure, it is allowed to adjust (for example, create, delete, update) a point of interest in a process of playing a video, thereby supporting adjustment of information presented in the process of video playing in a more flexible manner, and improving the efficiency of information acquisition.

According to some implementations of the present disclosure, at least one interaction request with the player application may be received; and the interaction request is stored in association with the media data in response to receiving an exit request for exiting the media data. As shown on the right side of FIG. 6, an action region 630 may present a historical interaction request between a user and the player application. In particular, the user may navigate to position X corresponding to the marked data 440, search content Y, and add annotation Z, and so forth. At this time, the action region 630 may store various historical operations of the user. After the video playing is turned off, historical actions may be stored in association with the video. For example, the historical actions may be stored in a separate file and an association is established between the file and the video. Alternatively, and/or in addition, historical actions may be stored in the configuration file, or the like. According to some implementations of the present disclosure, the historical actions by the user for respective time points in the video playing may be recorded, thereby providing more basis for subsequent evaluation of the degree of mastery of the video content by the user.

It should be understood that although only the case of presenting the marked data in the second region separate from the first region is shown in the drawings; alternatively, and/or in addition, the second region may be a part of the first region. For example, the second region may be determined in the first region (upper right corner or other position). For example, a resolution of an electronic device running the player application may be detected, and the second region is presented at a position different from the first region when the resolution is above a predetermined threshold; otherwise, the second region is determined inside the first region. Alternatively, and/or in addition, when the player application is in a landscape playing state, the first region and the second region may be presented in a separate manner; and when the player application is in a portrait playing state, the first region and the second region may be presented in an overlapping manner. With some implementations of the present disclosure, in a limited display region of an electronic device, the content of interest in the media data may be presented in a more comprehensive and obvious manner.

According to some implementations of the present disclosure, the media data comprises at least one of: video data, audio data, or presentation data. It should be appreciated that while the above is described with an English training video as an example of the media data, the media data 120 may have other contents, alternatively, and/or in addition. The media data 120 may comprise a video that describes a process of operating a software application, or a video that explains the knowledge of a certain subject, and so on. Alternatively, and/or in addition, the media data 120 may have other formats, such as, but not limited to, audio, or presentation data such as a slideshow, and so forth.

With some implementations of the present disclosure, the configuration information may be utilized to specify the point of interest in the media data. During the playing process of the media data, important data corresponding to the point of interest may be highlighted by the marked data, thereby improving the efficiency of obtaining the information by the user of the media player. According to some implementations of the present disclosure, the configuration information may be user-specific. For example, the configuration information may be set based on a point of interest of the user. Different users may be effectively presented with respective contents of interest based on the same media data. Further, the marked data supports interactions between the user and the media data. In this way, the media data that originally only supported passive playing may be converted into interactive media data. Thus, different interactive media data may be customized for different users in a more convenient and effective manner.

### Example Processes

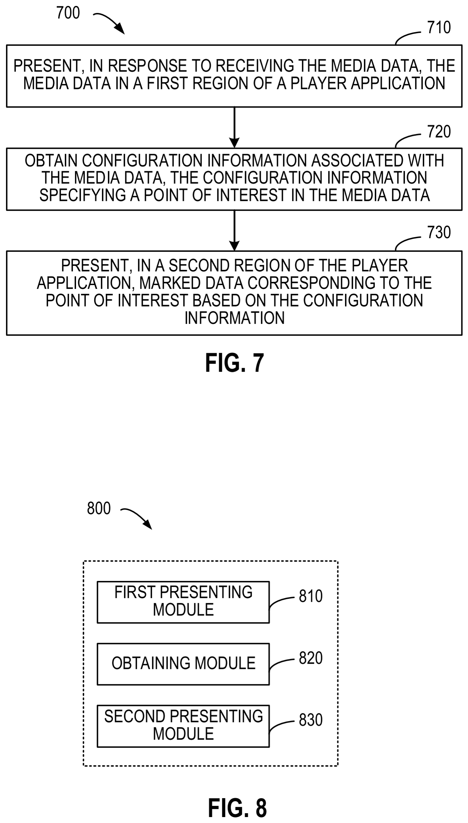

FIG. 7 illustrates a flowchart of a method 700 for playing media data according to some implementations of the present disclosure. At block 710, the media data is presented in a first region of a player application in response to receiving the media data. At block 720, configuration information associated with the media data is obtained, and the configuration information specifies a point of interest in the media data. At block 730, marked data corresponding to the point of interest is presented in a second region of the player application based on the configuration information.

According to some implementations of the present disclosure, the marked data is interactable data, and the method further comprises: providing in the player application an interaction result corresponding to an interaction request in response to receiving the interaction request for the marked data.

According to some implementations of the present disclosure, the second region comprises a progress region for presenting play progress of the media data, and presenting the marked data comprises: presenting in the progress region the marked data corresponding to the point of interest, the marked data indicating a playback position of a content of interest specified by the point of interest in the media data.

According to some implementations of the present disclosure, providing in the player application the interaction result corresponding to the interaction request comprises at least one of: presenting preview information corresponding to the content of interest in response to determining that the interaction request is of a preview type; or presenting the content of interest in the first region of the player application in response to determining that the interaction request is of a navigation type.

According to some implementations of the present disclosure, the second region comprises a description region for presenting description data associated with the media data, and presenting the marked data comprises: identifying the description data from at least one of the media data: a video, an audio, text, or an image; determining, from the description data, the marked data corresponding to the point of interest; and presenting in the description region the description data in a first style, and presenting the marked data in a second style.

According to some implementations of the present disclosure, providing in the player application the interaction result corresponding to the interaction request comprises: presenting, in the first region of the player application, the content of interest specified by the point of interest in response to determining that the interaction request is of a navigation type.

According to some implementations of the present disclosure, providing in the player application the interaction result corresponding to the interaction request comprises: performing in the player application an operation corresponding to the interaction request in response to determining that the interaction request is of an operation type, the operation comprising at least one of: searching, editing, or adding an annotation.

According to some implementations of the present disclosure, the method further comprises: creating another point of interest based on at least a portion of the description data; and updating the configuration information according to the other point of interest.

According to some implementations of the present disclosure, the method further comprises: receiving at least one interaction request associated with the player application; and storing the interaction request in association with the media data in response to receiving an exit request for exiting the media data.

According to some implementations of the present disclosure, the media data comprises at least one of: video data, audio data, or presentation data.

### Example Apparatus and Device

FIG. 8 illustrates a block diagram of an apparatus 800 for playing media data according to some implementations of the present disclosure. The apparatus 800 comprises a first presenting module 810 configured to present, in response to receiving the media data, the media data in a first region of a player application; an obtaining module 820 configured to obtain configuration information associated with the media data, the configuration information specifying a point of interest in the media data; and a second presenting module 830 configured to present, in a second region of the player application, marked data corresponding to the point of interest based on the configuration information.

According to some implementations of the present disclosure, the marked data is interactable data, and the apparatus further comprises a processing module configured to provide in the player application an interaction result corresponding to an interaction request in response to receiving the interaction request for the marked data.

According to some implementations of the present disclosure, the second region comprises a progress region for presenting play progress of the media data, and the second presenting module is further configured to present in the progress region the marked data corresponding to the point of interest, the marked data indicating a playback position of a content of interest specified by the point of interest in the media data.

According to some implementations of the present disclosure, the processing module is further configured to present preview information corresponding to the content of interest in response to determining that the interaction request is of a preview type; or present the content of interest in the first region of the player application in response to determining that the interaction request is of a navigation type.

According to some implementations of the present disclosure, the second region comprises a description region for presenting description data associated with the media data, and the second presenting module is further configured to identify the description data from at least one of the media data: a video, an audio, text, or an image; determine, from the description data, the marked data corresponding to the point of interest; and present in the description region the description data in a first style, and present the marked data in a second style.

According to some implementations of the present disclosure, the processing module is further configured to present, in the first region of the player application, the content of interest specified by the point of interest in response to determining that the interaction request is of a navigation type.

According to some implementations of the present disclosure, the processing module is further configured to perform in the player application an operation corresponding to the interaction request in response to determining that the interaction request is of an operation type, the operation comprising at least one of: searching, editing, or adding an annotation.

According to some implementations of the present disclosure, the processing module is further configured to create another point of interest based on at least a portion of the description data; and update the configuration information according to the other point of interest.

According to some implementations of the present disclosure, the processing module is further configured to receive at least one interaction request associated with the player application; and store the interaction request in association with the media data in response to receiving an exit request for exiting the media data.

According to some implementations of the present disclosure, the media data comprises at least one of: video data, audio data, or presentation data.

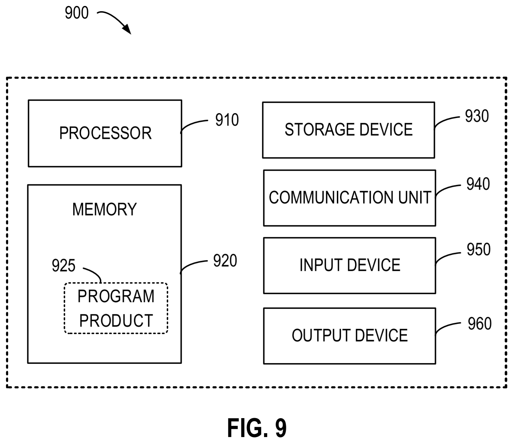

FIG. 9 illustrates a block diagram of a device 900 capable of implementing various implementations of the present disclosure. It should be understood that the computing device 900 shown in FIG. 9 is merely exemplary and should not constitute any limitation on the functionality and scope of the implementations described herein. The computing device 900 shown in FIG. 9 may be configured to implement the method described above.

As shown in FIG. 9, the computing device 900 is in the form of a general-purpose computing device. Components of the computing device 900 may include, but are not limited to, one or more processors 910, a memory 920, a storage device 930, one or more communication units 940, one or more input devices 950, and one or more output devices 960. The processor 910 may be an actual or a virtual processor and capable of performing various processes according to a program stored in the memory 920. In multiprocessor systems, multiple processors execute computer-executable instructions in parallel to improve the parallel processing capabilities of the computing device 900.

The computing device 900 typically includes a plurality of computer storage media. Such media may be any available media accessible by the computing device 900, including, but not limited to, volatile and non-volatile media, removable and non-removable media. The memory 920 may be a volatile memory (for example, a register, a cache, a random access memory (RAM)), a non-volatile memory (for example, a read-only memory (ROM), an electrically erasable programmable read-only memory (EEPROM), a flash memory), or some combination thereof. The storage device 930 may be a removable or non-removable medium and may include a machine-readable medium, such as a flash drive, a magnetic disk, or any other medium, which may be capable of storing information and/or data (for example, training data for training) and may be accessed within the computing device 900.

The computing device 900 may further include additional removable/non-removable, volatile/non-volatile storage media. Although not shown in FIG. 9, a disk drive for reading or writing from a removable, non-volatile magnetic disk (for example, a "floppy disk") and an optical disk drive for reading or writing from a removable, non-volatile optical disk may be provided. In these cases, each drive may be connected to a bus (not shown) by one or more data media interfaces. The memory 920 may include a computer program product 925 having one or more program modules configured to perform various methods or actions of various implementations of the present disclosure.

The communications unit 940 implements communications with other computing devices over a communication medium. Additionally, the functionality of components of the computing device 900 may be implemented in a single computing cluster or multiple computing machines capable of communicating over a communication connection. Thus, the computing device 900 may operate in a networked environment using logical connections with one or more other servers, network personal computers (PCs), or another network node.

The input device 950 may be one or more input devices, such as a mouse, a keyboard, a trackball, or the like. The output device 960 may be one or more output devices, such as a display, a speaker, a printer, or the like. The computing device 900 may also communicate with one or more external devices (not shown) as needed, external devices such as storage devices, display devices, and so on, communicate with one or more devices that enable a user to interact with the computing device 900, or communicate with any device (for example, a network card, a modem, and so on) that enables the computing device 900 to communicate with one or more other computing devices. Such communication may be performed via an input/output (I/O) interface (not shown).

According to an implementation of the present disclosure, there is provided a computer-readable storage medium having computer-executable instructions stored thereon, where the computer-executable instructions are executed by a processor to implement the method described above. According to an implementation of the present disclosure, a computer program product is further provided, the computer program product being tangibly stored on a non-transitory computer-readable medium and comprising computer-executable instructions, and the computer-executable instructions being executed by a processor to implement the method described above. According to an implementation of the present disclosure, a computer program product is provided, where a computer program is stored, and when the program is executed by a processor, the foregoing method is implemented.

Aspects of the present disclosure are described herein with reference to flowcharts and/or block diagrams of methods, apparatuses, devices, and computer program products implemented according to the present disclosure. It should be understood that each block of the flowchart and/or block diagram, and combinations of blocks in the flowcharts and/or block diagrams, may be implemented by computer-readable program instructions.

These computer-readable program instructions may be provided to a processor of a general-purpose computer, a special-purpose computer, or other programmable data processing device to produce a machine, such that the instructions, when executed by a processor of a computer or other programmable data processing device, produce means to implement the functions/acts specified in the flowchart and/or block diagram. These computer-readable program instructions may also be stored in a computer-readable storage medium that cause the computer, programmable data processing device, and/or other devices to function in a particular manner, such that the computer-readable medium storing instructions includes an article of manufacture including instructions to implement aspects of the functions/acts specified in the one or more blocks of the flowchart and/or block diagram.

The computer-readable program instructions may be loaded onto a computer, other programmable data processing device, or other device, such that a series of operational steps are performed on a computer, other programmable data processing device, or other device to produce a computer-implemented process, thereby the instructions executed on a computer, other programmable data processing device, or other device implementing the functions/acts specified in one of more blocks of the flowchart and/or block diagram.

The flowchart and block diagram in the figures show the architecture, functionality, and operation of possible implementations of systems, methods, and computer program products according to various implementations of the present disclosure. In this regard, each block in the flowchart or block diagram may represent a module, a program segment, or a portion of instructions that include one or more executable instructions for implementing the specified logical function. In some alternative implementations, the functions noted in the blocks may also occur in a different order than in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowcharts, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method (700) for playing media data, comprising:
presenting (710), in response to receiving the media data, the media data in a first region of a player application;
obtaining (720) configuration information associated with the media data, the configuration information specifying a point of interest in the media data; and
presenting (730), in a second region of the player application, marked data corresponding to the point of interest based on the configuration information.

2. The method (700) of claim 1, wherein the marked data is interactable data, and the method further comprises: providing in the player application an interaction result corresponding to an interaction request in response to receiving the interaction request for the marked data.

3. The method (700) of claim 2, wherein the second region comprises a progress region for presenting play progress of the media data, and presenting the marked data comprises: presenting in the progress region the marked data corresponding to the point of interest, the marked data indicating a playback position of a content of interest specified by the point of interest in the media data.

4. The method (700) of claim 3, wherein providing in the player application the interaction result corresponding to the interaction request comprises at least one of:
presenting preview information corresponding to the content of interest in response to determining that the interaction request is of a preview type; or
presenting the content of interest in the first region of the player application in response to determining that the interaction request is of a navigation type.

5. The method (700) of claim 2, wherein the second region comprises a description region for presenting description data associated with the media data, and presenting the marked data comprises:
identifying the description data from at least one of the media data: a video, an audio, text, or an image;
determining, from the description data, the marked data corresponding to the point of interest; and
presenting in the description region the description data in a first style, and presenting the marked data in a second style.

6. The method (700) of claim 5, wherein providing in the player application the interaction result corresponding to the interaction request comprises: presenting, in the first region of the player application, a content of interest specified by the point of interest in response to determining that the interaction request is of a navigation type.

7. The method (700) of claim 5, wherein providing in the player application the interaction result corresponding to the interaction request comprises: performing in the player application an operation corresponding to the interaction request in response to determining that the interaction request is of an operation type, the operation comprising at least one of: searching, editing, or adding an annotation.

8. The method (700) of claim 5, further comprising:
creating another point of interest based on at least a portion of the description data; and
updating the configuration information according to the other point of interest.

9. The method (700) of claim 1, further comprising:
receiving at least one interaction request associated with the player application; and
storing the interaction request in association with the media data in response to receiving an exit request for exiting the media data.

10. The method (700) of claim 1, wherein the media data comprises at least one of: video data, audio data, or presentation data.

11. An apparatus (800) for playing media data, comprising:
a first presenting module (810) configured to present, in response to receiving the media data, the media data in a first region of a player application;
an obtaining module (820) configured to obtain configuration information associated with the media data, the configuration information specifying a point of interest in the media data; and
a second presenting module (830) configured to present, in a second region of the player application, marked data corresponding to the point of interest based on the configuration information.

12. An electronic device (900), comprising:
at least one processor (910); and
at least one memory (920) coupled to the at least one processor (910) and storing instructions for execution by the at least one processor (910), the instructions, when executed by the at least one processor (910), causing the electronic device (900) to perform any of the methods (700) according to claims 1 to 10.

13. A computer-readable storage medium having stored thereon computer instructions which, when executed by a processor, cause the processor to perform any of the methods (700) according to claims 1 to 10.

14. A computer instruction product comprising computer instructions, wherein the computer instructions, when executed by a processor, perform any of the methods (700) according to claims 1 to 10.
